# EUROPÄISCHE PATENTSCHRIFT

(11) **EP 1 821 064 B1**
(45) Veröffentlichungstag und Bekanntmachung des Hinweises auf die Patenterteilung: **23.12.2009**
(21) Anmeldenummer: 07002988.9
(22) Anmeldetag: 13.02.2007
(51) Int. Cl.: G01B 11/25

(54) **Verfahren und Vorrichtung zum Erfassen einer Kontur einer reflektierenden Oberfläche**
Method and device for determining the contour of a reflecting surface
Procédé et dispositif destinés à la détection d'un contour d'une surface réfléchissante

(30) Priorität: 15.02.2006 DE 102006006876
(43) Veröffentlichungstag der Anmeldung: 22.08.2007
(73) Patentinhaber: Deutsches Zentrum für Luft- und Raumfahrt e.V., 51147 Köln (DE)
(72) Erfinder: Konrath, Robert, Dr.-Ing., 37077 Göttingen (DE); Klinge, Falk, Dr.-Ing., 37079 Göttingen (DE); Schröder, Andreas, Dr. rer. nat., 37078 Göttingen (DE); Goldhahn, Erik, Dipl.-Ing., 28199 Bremen (DE)
(74) Vertreter: Rehberg Hüppe + Partner

(56) Entgegenhaltungen:
- WO-A-02/42715
- WO-A-2007/034848
- DE-A1- 10 341 959
- JP-A- 1 165 907
- TARINI M ET AL: "3D acquisition of mirroring objects using striped patterns" Juli 2005 (2005-07), GRAPHICAL MODELS, ELSEVIER, SAN DIEGO, CA, US, PAGE(S) 233-259 , XP004902719 ISSN: 1524-0703 * Seite 243 - Seite 249 *

## Beschreibung

Die Erfindung bezieht sich auf ein Verfahren zum Erfassen einer Kontur einer Oberfläche mit den Merkmalen des Oberbegriffs des unabhängigen Patentanspruchs 1 sowie auf eine Vorrichtung zum Erfassen einer Kontur einer Oberfläche mit den Merkmalen des Oberbegriffs des unabhängigen Patentanspruchs 8.

Unter der Kontur der Oberfläche ist hierbei deren dreidimensionaler Verlauf zu verstehen. Unter dem Erfassen der Kontur ist auch schon das qualitative Erfassen von Abweichungen der Kontur von einer Referenzkontur zu verstehen, es verlangt kein absolute Beschreibung der von der Kontur im Raum beschriebenen Fläche.

### STAND DER TECHNIK

Ein Verfahren und eine Vorrichtung zum Vermessen einer Oberfläche sind aus der DE 103 41 959 A1 bekannt. Hier wird ein Punktemuster aus einer Mehrzahl von einzelnen Punkten in einer Projektionsrichtung auf die Oberfläche projiziert, wobei in einer von der Projektionsrichtung abweichenden Abbildungsrichtung mit einer Kamera ein Bild des auf die Oberfläche projizierten Punktemusters aufgenommen wird. Lageverschiebungen von Punkten des Punktemusters in dem Bild gegenüber Punkten in einem Referenzbild werden bestimmt und aus den Lageverschiebungen wird unter Berücksichtigung eines lokalen Abbildungsmaßstabs des Bildes auf lokale Lageunterschiede der Oberfläche gegenüber einer dem Referenzbild entsprechenden Referenzoberfläche geschlossen. Die zugehörige Vorrichtung weist neben der Kamera einen Projektionsapparat zum Projizieren des Punktemusters auf die Oberfläche und eine die voranstehend skizzierte Auswertung vornehmende Auswerteeinheit auf. Als Nachteil des bekannten Verfahrens und der bekannten Vorrichtung stellt sich heraus, dass diese nicht oder nur schlecht zum Vermessen glänzender oder durchscheinender Oberflächen geeignet sind, da bei derartigen Oberflächen der überwiegende Teil der projizierten Punkte des Punktemusters nicht mit der Kamera in ein Bild aufnehmbar ist. Eine Beschichtung der Oberfläche, so dass diese diffus streut, um gute Voraussetzungen für die Anwendung des bekannten Verfahrens in der bekannten Vorrichtung zu schaffen, ist vielfach unpraktikabel, beispielsweise wenn es darum geht, glänzende Oberflächen von Serienartikeln auf ihre Maßhaltigkeit hin zu überprüfen.

Ein Verfahren und eine Vorrichtung zum Erfassen einer Kontur einer Oberfläche mit den Merkmalen des Oberbegriffs des unabhängigen Patentanspruchs 1 bzw. 8 sind aus der WO-A-0242715 bekannt. Hier besteht das Punktemuster auf Linien bekannter Geometrie. Die Bilder der in der Oberfläche gespiegelten Linien werden nach Art der Moiré-Technik mit einem Referenzbild überlagert und ausgewertet. Um größere Oberflächen abzudecken, können mehrere Spiegel und Kameras vorgesehen sein, um mehrere Bilder aufzunehmen.

### AUFGABE DER ERFINDUNG

Der Erfindung liegt die Aufgabe zugrunde, ein Verfahren und eine Vorrichtung zum Erfassen einer Kontur einer Oberfläche aufzuzeigen, die die Zweideutigkeit auflösen, die dadurch entsteht, dass eine Änderung der Neigung der spiegelnden Oberfläche lokal denselben Effekt auf das sich spiegelnde Punktmuster haben kann wie eine Änderung der Höhenlage der spiegelnden Oberfläche ohne Änderung der Neigung.

### LÖSUNG

Erfindungsgemäß wird diese Aufgabe durch ein Verfahren mit den Merkmalen des unabhängigen Patentanspruchs 1 und eine Vorrichtung mit den Merkmalen des unabhängigen Patentanspruchs 9 gelöst. Bevorzugte Ausführungsformen des neuen Verfahrens sind in den abhängigen Patentansprüchen 2 bis 8 und bevorzugte Ausführungsformen der neuen Vorrichtung in den abhängigen Patentansprüchen 10 bis 16 definiert.

### BESCHREIBUNG DER ERFINDUNG

Bei dem neuen Verfahren wird das Punktemuster so neben der spiegelnden Oberfläche angeordnet, dass das mit der Kamera aufgenommene Bild ein virtuelles Bild des sich in der Oberfläche spiegelnden Punktemusters abbildet. D. h., bei dem neuen Verfahren wird kein Punktemuster auf die Oberfläche mit der interessierenden Kontur projiziert, sondern mit der Kamera wird ein Bild eines Spiegelbildes eines allenfalls getrennt von der Oberfläche real vorhandenen Punktemusters in der Oberfläche aufgenommen. Das Punktemuster, das sich in der Oberfläche spiegelt, kann dabei ein auf eine Wand aufgedrucktes oder aufgeklebtes Punktemuster, aber beispielsweise auch ein auf eine solche Wand projiziertes Punktemuster sein. Das Punktemuster kann auch auf einem Bildschirm neben der spiegelnden Oberfäche dargestellt werden. Es ist sogar möglich, dass das Punktemuster selbst ein virtuelles Bild ist. Das Bild des sich in der Oberfläche spiegelnden Punktemusters, das mit der Kamera aufgenommen wird, ändert sich mit jeder Änderung der Kontur der spiegelnden Oberfläche. Die Lage der Punkte des Punktemusters in dem mit der Kamera aufgenommenen Bild bestimmt sich nach dem Gesetz von Snellius, nach dem der Einfallwinkel eines Strahls von jedem Punkt des Punktemusters zu der spiegelnden Oberfläche und der Ausfallwinkel des von der Oberfläche zu der Kamera abgelenkten Strahls gegenüber der Normalen der spiegelnden Oberfläche betrachtet jeweils den gleichen Betrag aufweisen. Jede Veränderung der Neigung der Oberfläche oder ihrer Höhe führt damit zu einer Lageveränderung eines durch diesen Bereich der Oberfläche reflektierten Punkt des Punktemusters in dem mit der Kamera abgebildeten Spiegelbild. Das Spiegelbild, das mit der Kamera in das Bild abgebildet wird, ist ein virtuelles Bild, d. h. die Punkte des Punktemusters sind nirgendwo tatsächlich so räumlich angeordnet, wie es von der Kamera gesehen wird. Das neue Verfahren eignet sich nicht nur für undurchsichtige spiegelnde Oberflächen sondern auch für Oberflächen von durchsichtigen Objekten, soweit diese - wenn auch nur unter kleinen Winkeln - in der Lage sind, das Punktemuster zu spiegeln. So können mit dem neuen Verfahren beispielsweise auch Konturen von Oberflächen von Objekten aus Glas erfasst werden.

Als geeignete Punktemuster kommen grundsätzlich sehr verschiedene Muster in Frage, zu denen auch regelmäßige Muster aus einzelnen Punkten, Muster aus gitterartig kreuzenden Linien sowie Schachbrettmuster und sogar Streifenmuster gehören. Zur Unterscheidbarkeit der einzelnen Punkte des jeweiligen Musters ist es bevorzugt, wenn diese eine stochastische Verteilung mit unterschiedlichen Abständen und Relativlagen verschiedener zueinander benachbarter Punkte aufweisen. So ist das Punktemuster bei dem neuen Verfahren vorzugsweise ein stochastisches Punktemuster aus stochastisch angeordneten einzelnen Punkten. Die Zuordnung der Punkte des Punktemusters in dem Bild des Spiegelbild zu den Punkten des Punktemusters in dem Referenzbild kann dann durch statistische Verfahren, beispielsweise unter Anwendung so genannter Kreuzkorrelationstechniken erfolgen, um die Lageverschiebungen der Punkte des Punktemusters in dem Bild des Spiegelbildes gegenüber dem Referenzbild lokal zu erfassen. Hieraus lässt sich dann auf lokale Konturänderungen der betrachteten Oberfläche gegenüber der Referenzkontur schließen.

Damit die Lageverschiebungen der Punkte des Punktemusters in dem Bild des Spiegelbildes gegenüber dem Referenzbild in Bezug auf Konturänderungen der Oberfläche gegenüber der Referenzoberfläche überhaupt aussagekräftig sind, muss das Punktemuster gegenüber der Kamera definiert, d.h. fest ausgerichtet werden; zumindest muss die jeweilige Position des Punktemusters gegenüber der Kamera bekannt sein.

Es versteht sich, dass es weiterhin sinnvoll ist, die Oberfläche gegenüber dem Punktemuster und der Kamera definiert auszurichten, wenn es um die Erfassung echter Änderungen der Kontur der betrachteten Oberfläche gegenüber der Referenzoberfläche und nicht um Lageveränderungen der gesamten Oberfläche gegenüber der Referenzoberfläche geht. Dies kann z. B. über Fixpunkte erfolgen in denen ein die Oberfläche aufweisendes Objekt abgestützt wird.

Das bei dem neuen Verfahren verwendete Referenzbild kann ein virtuelles Bild des sich in einer realen, eine definierte Kontur aufweisenden Referenzoberfläche spiegelnden Punktemusters abbilden. Diese Referenzoberfläche kann dann als Lehre verwendet werden, mit der die anschließend untersuchten Oberflächen verglichen werden. D. h., die Konturen der anschließend untersuchten Oberflächen werden mit der Kontur der Referenzoberfläche verglichen und auftretende Abweichungen werden qualitativ oder quantitativ erfasst, wobei auch die quantitative Erfassung nicht bedeuten muss, dass der absolute Verlauf der Kontur in der aktuell untersuchten Oberfläche bestimmt wird. Z.B. kann die Summe der mit dem lokalen Abbildungsmaßstab des Punktemusters gewichteten Lageverschiebungen der beobachteten Punkte als Hinweis auf den Umfang der Abweichung von der Referenzkontur berechnet werden.

Grundsätzlich ist es mit dem neuen Verfahren aber auch möglich, die Abweichungen der Kontur der aktuell untersuchten Oberfläche von der Referenzkontur nach Betrag und Richtung und damit bei Kenntnis der Referenzkontur die Kontur als solche zu bestimmen. Da jedoch bei dem neuen Verfahren eine Änderung der Neigung der Oberfläche lokal denselben Effekt haben kann wie eine Änderung der Höhenlage der Oberfläche ohne Änderung der Neigung, ist dann, wenn der absolute Verlauf der aktuell untersuchten Oberfläche zu bestimmen ist, diese Zweideutigkeit aufzulösen. Zu diesem Zweck wird mit einer zweiten Kamera, die aus einer anderen Richtung als die erste Kamera auf die Oberfläche gerichtet ist, ein zweites Bild desselben oder eines zweiten Punktemusters aufgenommen, wobei das zweite Bild ebenfalls ein virtuelles Bild des sich in der Oberfläche spiegelnden Punktemusters abbildet. Aus Lageverschiebungen von Punkten in den Bildern beider Kameras gegenüber zwei entsprechenden zu der Referenzkontur zugehörigen Referenzbildern wird dann auf den Verlauf der Kontur der Oberfläche gegenüber der Referenzkontur geschlossen. Mit der zweiten, ein weiteres Spiegelbild aus einer anderen Richtung aufnehmenden Kamera wird die Mehrdeutigkeit in Bezug auf die Ursachen der beobachteten Effekte beseitigt. Dabei kann das mit der zweiten Kamera abgebildete virtuelle Bild ein zweites Spiegelbild desselben Punktemuster sein, von dem auch die erste Kamera ein Spiegelbild abbildet, oder es kann sich um ein zweites Punktemuster handeln.

Vorzugsweise werden mit den beiden Kameras Spiegelbilder von zwei gleichen Punktemustern in der Oberfläche abgebildet, und zwar in einer solchen Anordnung, dass in den Bildern beider Kameras auf denselben physikalischen Bereich der Oberfläche Punkte aus den gleichen Bereichen der beiden Punktemuster zu sehen sind. Da sich die Lagen der Bereiche der Punktemuster gegenüber den physikalischen Bereichen der Oberfläche bei Konturveränderungen der Oberfläche verschieben, kann diese Anforderung sinnvoll nur in Bezug auf die zu der Referenzkontur zugehörigen Referenzbilder vollständig erfüllt werden. Bei zumindest grundsätzlicher Erfüllung der Anforderung ist es aber mit statistischen Verfahren sehr einfach möglich, die in den Bildern der beiden Kameras beobachteten Lageverschiebungen von bestimmten Punkten einem physikalischen Bereich der Oberfläche zuzuordnen und damit die Zweideutigkeit der Lageverschiebungen bei lokaler Betrachtung nur eines der Bilder besonders schnell aufzulösen.

Eine zusätzliche Maßnahme zur Auflösung dieser Zweideutigkeit besteht darin, dass mit einer weiteren Kamera, die direkt auf das Punktemuster gerichtet ist, ein weiteres, direktes Bild desselben Punktemusters aufgenommen wird wie mit einer der Kameras, die ein virtuelles Bild abbildet, wobei aus Lageverschiebungen von Punkten in dem Bild, das das virtuelle Bild des Punktemusters abbildet, gegenüber Punkten in dem direkten Bild auf den Verlauf der Kontur der Oberfläche gegenüber der Referenzkontur geschlossen wird. Bei Kenntnis des Musters, das sich in der Oberfläche spiegelt, können aus dem Spiegelbild zusätzliche Informationen gewonnen werden, als sie allein aus dem Vergleich mit dem Referenzbild zu der Referenzkontur zur Verfügung stehen. Wenn das Punktemuster, das sich in der Oberfläche spiegelt, als solches bekannt ist, kann auch auf die weitere Kamera verzichtet werden. Stattdessen kann das bekannte Punktemuster als weiteres Referenzbild zur Auswertung der Bilder verwendet werden, die virtuelle Bilder, d. h. Spiegelbilder des Punktemusters abbilden.

Insbesondere dann, wenn das Punktemuster in einer zu der spiegelnden Oberfläche parallelen Ebene angeordnet wird, ist bei der Abbildung des Spiegelbildes des Punktemusters in der Oberfläche mit der jeweiligen Kamera das Scheimpflug-Kriterium einzuhalten, um alle Punkte des Punktemusters scharf abzubilden.

Überdies versteht es sich bei dem neuen Verfahren, dass das verwendete Punktemuster so ausgebildet wird, dass es bei der Abbildung seines Spiegelbildes in der Oberfläche mit jeder Kamera zu einer möglichst homogenen Punktedichte in dem aufgenommenen Bild führt. Aufgrund der sehr unterschiedlichen Abbildungsmaßstäbe bedeutet dies in der Regel, dass das Punktemuster selbst sehr unterschiedliche Punktedichten aufweist, und dass eine ideal gleichmäßige Punktedichte nur in dem Referenzbild erzielt werden kann.

Bei der neuen Vorrichtung ist das Punktemuster so neben einem Objekthalter angeordnet, dass dann, wenn der Objekthalter ein Objekt mit einer spiegelnden Oberfläche hält, das mit der Kamera aufgenommene Bild ein virtuelles Bild, d.h. ein Spiegelbild des Punktemusters in der spiegelnden Oberfläche des Objekts abbildet. Typischerweise ist der Objekthalter so ausgebildet, dass er die Oberfläche über Fixpunkte gegenüber dem Punktemuster und der Kamera definiert ausrichtet.

Weitere Details der neuen Vorrichtung sind bereits im Zusammenhang mit den entsprechenden Merkmalen des neuen Verfahrens erläutert worden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt die neue Vorrichtung bei der Durchführung des neuen Verfahrens zum Erfassen einer Kontur einer spiegelnden Oberfläche in einer schematischen Seitenansicht.
- **Fig. 2**: illustriert die Auswirkungen einer Änderung der Neigung und einer Änderung der Lage der spiegelnden Oberfläche.
- **Fig. 3**: gibt einen Ausschnitt eines Punktemusters der Vorrichtung gemäß Fig. 1 wieder; und
- **Fig. 4**: erläutert die Lageverschiebung eines Spiegelbildes eines Punktemusters gemäß Fig. 3 in der spiegelnden Oberfläche gemäß Fig. 1 und 2.
- **Fig. 5**: skizziert eine weitere Maßnahme, die Zweideutigkeit von Lageverschiebungen von Punkten des Punktemusters in dem mit der Kamera aufgenommenen Bild aufzuklären.

### FIGURENBESCHREIBUNG

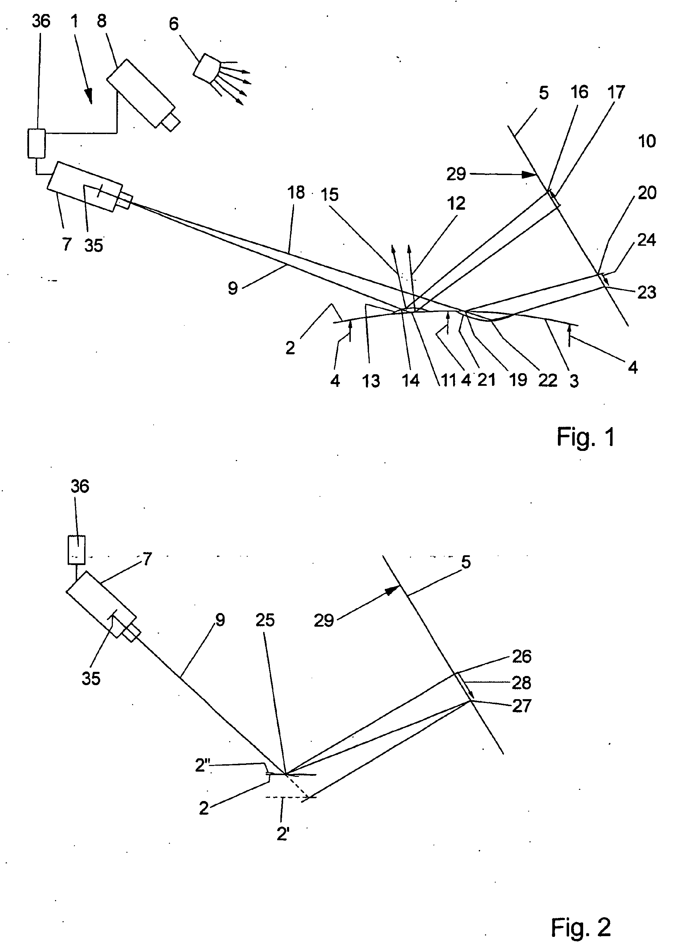

**Fig. 1** zeigt eine Vorrichtung 1 zur Erfassung der Kontur einer spiegelnden Oberfläche 2 eines Objekts 3. Das Objekt 3 befindet sich auf einem Objekthalter 4, der hier nur in Form von drei Pfeilen wiedergegeben ist, welche auf die Abstützung des Objekts 3 durch den Objekthalter 4 in mindestens drei Fixpunkten hinweisen. Neben dem Objekthalter 4 ist eine Wand 5 angeordnet, auf die ein Punktemuster 29 aufprojiziert oder aufgedruckt ist. Im vorliegenden Fall handelt es sich um ein aufgedrucktes Punktemuster 29, das mit einer Lichtquelle 6 beleuchtet wird. Bei der Lichtquelle 6 handelt es sich hier um eine Weißlichtquelle, es könnte aber auch eine monochromatische Lichtquelle sein. Das Spiegelbild des sich in der spiegelnden Oberfläche 2 spiegelnden Punktemusters wird mit zwei Kameras 7 und 8 aus unterschiedlichen Richtungen in Bildern 35 abgebildet. Dabei ändern sich die lokal mit den Kameras 7 und 8 erfassten Bereiche der Wand 5 bzw. des sich darauf befindlichen Punktemusters mit jeder Änderung der Kontur der spiegelnden Oberfläche 2, wie dies für zwei verschiedene Konturänderungen in Fig. 1 skizziert ist. Ein Sichtstrahl 9 der Kamera 7 erfasst einen Punkt 10 auf der Wand 5, wobei er in einem Punkt 11 nach dem Gesetz von Snellius, d. h. Einfallwinkel = Ausfallwinkel, von der spiegelnden Oberfläche 2 gespiegelt wird. Ein Pfeil 12 gibt die Oberflächennormale der Oberfläche 2 in dem Punkt 11 wieder. Durch eine Ausbeulung 13 der Oberfläche 2 wird der Sichtstrahl 9 in einem Punkt 14 der Oberfläche 2, zu der ein Pfeil 15 die Oberflächennormale angibt, gespiegelt, so dass der Sichtstrahl 9 einen Punkt 16 der Wand 5 bzw. des darauf befindlichen Punktemusters erfasst, der gegenüber dem Punkt 10 eine Lageverschiebung 17 nach oben aufweist. Demgegenüber wird ein Sichtstrahl 18, der von der Oberfläche 2 in einem Punkt 19 gespiegelt wird, so dass er einen Punkt 20 der Wand 5 erfasst, im Falle einer Einbeulung 21 der Oberfläche 2 in einem Punkt 22 reflektiert, so dass er dann den Punkt 23 erfasst, der gegenüber dem Punkt 20 eine Lageverschiebung 24 aufweist, welche der Lageverschiebung 17 entgegengerichtet ist. Jede Lageverschiebung eines Punkts des Punktemusters 29 auf der Wand 5 in dem Spiegelbild des Punktemusters 29 in der spiegelnden Oberfläche 2 weist daher auf eine Veränderung der Kontur der Oberfläche 2 beispielsweise gegenüber einer als Lehre dienenden Referenzoberfläche hin, zu der ein Referenzspiegelbild in einer Auswerteeinheit 36 gespeichert ist. Die Veränderung der Kontur kann dabei unter Berücksichtigung eines lokalen Abbildungsmaßstabs nicht nur qualitativ sondern auch quantitativ erfasst werden. Für eine vollständige quantitative Erfassung von Konturänderungen gegenüber der Referenzoberfläche, die für eine Bestimmung des absoluten Verlaufs der geänderten Kontur erforderlich ist, ist aber neben einer Abbildung eines Spiegelbildes des Punktemusters 29 auf der Wand 5 mit der Kamera 7 auch eine zweite Abbildung eines zweiten Spiegelbildes dieses oder eines anderen Punktemusters mit der zweiten Kamera 8 aus einer zweiten Richtung notwendig, weil sich aus einer Umlenkung eines der Sichtstrahlen 9 und 18 noch nicht direkt die Art der Änderung der Kontur der spiegelnden Oberfläche 2 ableiten lässt. Diese Zweideutigkeit der mit einer Konturveränderung beobachteten Lageverschiebungen wird jetzt in Verbindung mit Fig. 2 näher erläutert werden.

**Fig. 2** zeigt den Sichtstrahl 9, der hier von der spiegelnden Oberfläche 2 zunächst in einem Punkt 25 reflektiert wird, so dass er in einem Punkt 26 auf die Wand 5 trifft. Nach einer Konturänderung der Oberfläche 2 trifft der Sichtstrahl 9 hingegen in einem Punkt 27 auf die Wand 5. Dabei kann die zugrunde liegende Konturänderung der Oberfläche 2 ausschließlich aus einer mit einer gestrichelten Linie gezeichneten Parallelverschiebung der Oberfläche 2 in die Oberfläche 2' oder ausschließlich aus einer Verkippung der Oberfläche 2 um eine Achse durch den Punkt 25 in die Oberfläche 2" oder aus Kombinationen davon bestehen. Die tatsächliche Ursache der Lageverschiebung 28 von dem Punkt 26 zu dem Punkt 27 ist daher nicht aufklärbar, wenn das auf der Wand 5 befindliche Punktemusters über die spiegelnde Oberfläche 2 mit einer Kamera nur aus einer Richtung betrachtet wird.

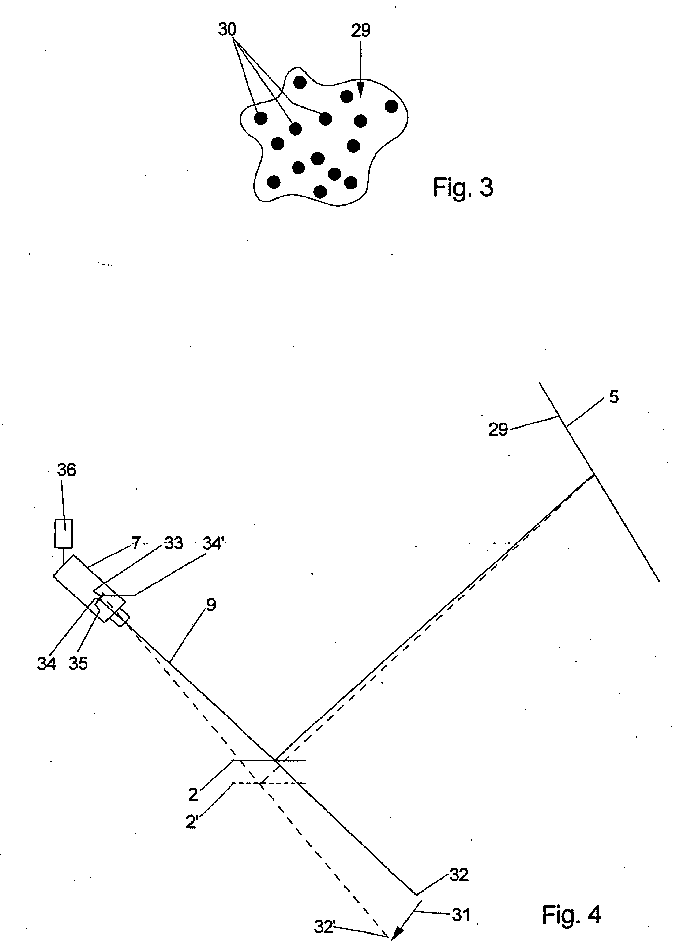

**Fig. 3** skizziert einen Ausschnitt aus dem Punktemuster 29, das auf die Wand 5 gemäß Fig. 1 oder Fig. 2 aufgedruckt oder aufprojiziert ist. Das Punktemuster 29 besteht aus einer stochastischen Verteilung von Punkten 30. Jeder Bereich des Punktemusters ist damit einzigartig in Bezug auf die Relativanordnung der Punkte 30 zueinander, was Voraussetzung dafür ist, einen bestimmten Bereich des Punktemusters 29 in dem Bild der Kamera durch statistische Verfahren dem entsprechenden Bereich in dem Referenzbild zuzuordnen, um in der Folge die Lageverschiebungen der einzelnen Punkte in dem Bild gegenüber dem Referenzbild zu ermitteln.

Während im Zusammenhang mit den Fig. 1 und 2 skizziert wurde, wie sich der von einem Sichtstrahl der Kamera 7 erfasste Bereich der Wand 5 mit einer Veränderung der Kontur der spiegelnden Oberfläche 2 ändert, skizziert **Fig. 4**, wie einer der Punkte 30 des Punktemusters auf der Wand 5 durch eine Konturänderung der spiegelnden Oberfläche 2 durch eine Parallelverschiebung in die Oberfläche 2' eine Lageverschiebung 31 seiner virtuellen Position 32 in die Position 32' innerhalb des Spiegelbildes des Punktemusters 29 in der spiegelnden Oberfläche 2 bzw. 2' erfährt. Dies führt zu einer entsprechenden Lageverschiebung 33 des Abbildes 34 des Punkts 30 in das Abbild 34' innerhalb des mit der Kamera 35 aufgenommenen Bildes 35. Gemäß Fig. 2 kann diese Lageverschiebung 33 bei Verwendung nur einer Kamera 7 noch nicht eindeutig einer Parallelverschiebung der Oberfläche 2 in die Oberfläche 2' zugeordnet werden, sondern sie könnte auch auf einer Änderung der Neigung der Oberfläche 2 beruhen. Diese Zweideutigkeit wird durch die Aufnahme eines weiteren Bildes eines Spiegelbildes aus einer anderen Richtung auf die Oberfläche 2 mit der zweiten Kamera 8 gemäß Fig. 1 beseitigt. Günstigerweise können die Blickrichtungen der beiden Kameras 7 und 8 untereinander etwa einen rechten Winkel einschließen, während ihre Winkel zu der der Oberfläche 2 etwa gleich groß sind. Weiterhin ist es günstig, wenn mit den beiden Kameras 7 und 8 virtuelle Bilder von zwei getrennten aber gleichen Punktemustern 29 abgebildet werden, die jeweils so zu den Kameras 7 und 8 ausgerichtet sind, dass sich in den Bildern 35 der Kameras 7 und 8 jeweils gleiche Bereiche des Punktemusters 29 auf jeweils denselben physikalischen Bereichen der mit abgebildeten spiegelnden Oberfläche 2 finden. Dies erleichtert den Vergleich der Bilder 35 der Kameras 7 und 8 durch statistische Verfahren.

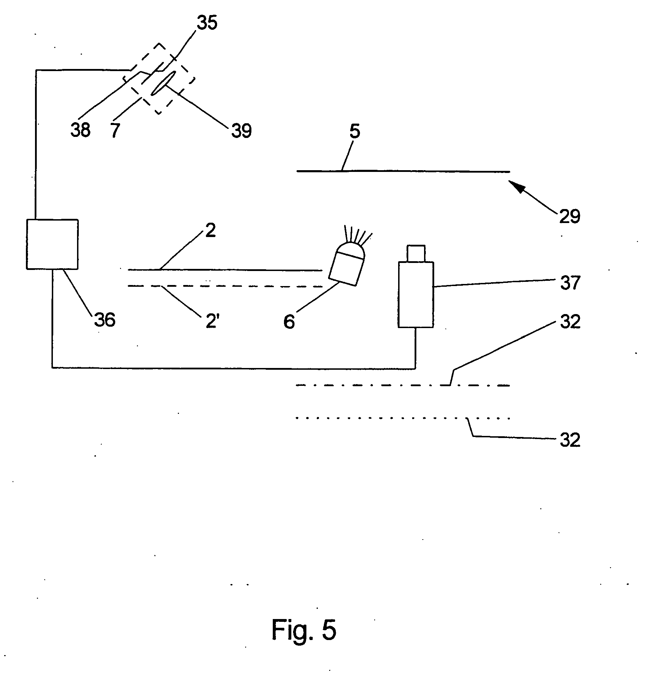

**Fig. 5** skizziert eine weitere Maßnahme, die Zweideutigkeit von Lageverschiebungen von Punkten des Punktemusters 29 in dem mit der Kamera 7 aufgenommenen Bild aufzuklären. Hier wird das Punktemuster 29 zusätzlich direkt mit einer weiteren Kamera 37 abgebildet. Alternativ hierzu ist in der Auswerteeinheit 36 ein weiteres Referenzbild gespeichert, das das Punktemuster 29 oder ein reales Bild davon wiedergibt. In jedem Fall kann durch Kenntnis des Punktemusters 29 und die damit verbundene Kenntnis der Abstände der Punkte des Punktemusters 29 aus dem Vergleich der Abstände der Punkte in dem Bild 35 auf den lokalen Abstand der Oberfläche 2 von der Wand 5 geschlossen werden. Veränderungen des Abstands können damit Paralleleverschiebungen der Oberfläche 2 zugeordnet werden, so dass diese von Verkippungen der Oberfläche 2 unterscheidbar sind. In Fig. 5 ist skizziert, wie eine Parallelverschiebung der Oberfläche 2 in die Oberfläche 2' um ein bestimmtes Maß bei der hier gewählten parallelen Ausrichtung der Wand 5 zu der Oberfläche 2 zu einer Parallelverschiebung des virtuellen Bildes 32 des Punktemusters 29 in das virtuelle Bild 32' um das doppelte Maß führt. D. h. die Entfernung des virtuellen Bildes 32 von der Kamera 7 ändert sich relativ stark und damit auch der Abstand der Punkte des Punktemusters 29 untereinander. Weiterhin ist aus Fig. 5 entnehmbar, dass die Parallelanordnung der Wand 5 mit dem Punktemuster 29 seitlich neben der Oberfläche 2 günstige Beleuchtungsverhältnisse des Punktemusters 29 durch die Lichtquelle 6, ohne dass sich diese in der Oberfläche 2 spiegelt, und in der Folge einen hohen Kontrast des Punktemusters 29 in dem Bild 35 der Kamera 7 ergibt. Bei der Kamera 7 ist angedeutet, dass ihr Objektiv 39 und ihr Bildsensor 38 unter Einhaltung des Scheimpflug-Kriteriums gegenüber dem virtuellen Bild 32 des Punktemusters 29 ausgerichtet sind, d. h. zwischen der Hauptebene des Objektivs 39 und dem Bildsensor 38 ist ein derartiger Winkel vorgesehen, dass sich die Hauptebene des Objektivs 39, die Ebene des Bildsensors 38 und die Ebene des virtuellen Bildes 32 des Punktemusters 29 in einer gemeinsamen Achse schneiden.

### BEZUGSZEICHENLISTE

| | | | |
|---|---|---|---|
| 1 | Vorrichtung | 11 | Punkt |
| 2 | Oberfläche | 12 | Normale |
| 3 | Objekt | 13 | Ausbeulung |
| 4 | Objekthalter | 14 | Punkt |
| 5 | Wand | 15 | Normale |
| 6 | Lichtquelle | 16 | Punkt |
| 7 | Kamera | 17 | Lageverschiebung |
| 8 | Kamera | 18 | Sichtstrahl |
| 9 | Sichtstrahl | 19 | Punkt |
| 10 | Punkt | 20 | Punkt |
| | | | |
| 21 | Einbeulung | 31 | Lageverschiebung |
| 22 | Punkt | 32 | virtuelles Bild |
| 23 | Punkt | 33 | Lageverschiebung |
| 24 | Lageverschiebung | 34 | Abbild |
| 25 | Punkt | 35 | Bild |
| 26 | Punkt | 36 | Auswerteeinheit |
| 27 | Punkt | 37 | Kamera |
| 28 | Lageverschiebung | 38 | Bildsensor |
| 29 | Punktemuster | 39 | Objektiv |
| 30 | Punkt | | |

## Patentansprüche

1. Verfahren zum Erfassen einer Kontur einer spiegelnden Oberfläche (2),
- wobei mit einer ersten auf die spiegelnde Oberfläche gerichteten Kamera (7) ein zweidimensionales Bild eines Punktemusters (29) aufgenommen wird,
- wobei das Punktemuster (29) so neben der spiegelnden Oberfläche (2) angeordnet wird, dass das mit der ersten Kamera (7) aufgenommene Bild (35) ein virtuelles Bild (32) des sich in der spiegelnden Oberfläche (2) spiegelnden Punktemusters (29) abbildet,
- wobei mit einer zweiten Kamera (8) ein zweites Bild (35) desselben oder eines zweiten Punktemusters (29) aufgenommen wird,
- wobei das zweite Bild (35) ebenfalls ein virtuelles Bild (32) des sich in der spiegelnden Oberfläche (2) spiegelnden Punktemusters (29) abbildet,
**dadurch gekennzeichnet, dass**
zur Auflösung der Zweideutigkeit, dass eine Änderung der Neigung der spiegelnden Oberfläche (2) denselben Effekt haben kann wie eine Änderung der Höhenlage der spiegelnden Oberfläche (2), die zweite Kamera (8) aus einer anderen Richtung als die erste Kamera (7) auf die spiegelnde Oberfläche (2) gerichtet ist, und dass
aus Lageverschiebungen von Punkten (34) in den Bildern (35) beider Kameras (7, 8) gegenüber zwei entsprechenden zu einer Referenzkontur zugehörigen Referenzbildern auf den Verlauf der Kontur der spiegelnden Oberfläche (2) gegenüber der Referenzkontur geschlossen wird.

2. Verfahren nach Anspruch 1, **dadurch gekennzeichnet, dass** das Punktemuster (29) ein stochastisches Punktemuster (29) aus stochastisch verteilten einzelnen Punkten (30) ist.

3. Verfahren nach Anspruch 1 oder 2, **dadurch gekennzeichnet, dass** das Punktemuster (29) gegenüber den Kameras (7, 8) definiert ausgerichtet wird.

4. Verfahren nach Anspruch 3, **dadurch gekennzeichnet, dass** die Oberfläche (2) gegenüber dem Punktemuster (29) und den Kameras (7, 8) über Fixpunkte ausgerichtet wird.

5. Verfahren nach einem der Ansprüche 1 bis 4, **dadurch gekennzeichnet, dass** das Referenzbild ein virtuelles Bild (32) des sich in einer realen Referenzoberfläche (2) mit definierter Kontur spiegelnden Punktemusters (29) abbildet.

6. Verfahren nach einem der Ansprüche 1 bis 5, **dadurch gekennzeichnet, dass** in den beiden zu der Referenzkontur zugehörigen Referenzbildern (32) auf denselben physikalischen Bereichen der Referenzkontur jeweils Punkte aus den gleichen Bereichen zweier übereinstimmender Punktemuster (29) abgebildet werden.

7. Verfahren nach einem der Ansprüche 1 bis 6, **dadurch gekennzeichnet, dass** mit einer weiteren Kamera (37), die direkt auf das Punktemuster (29) gerichtet ist, ein weiteres, direktes Bild desselben Punktemusters (29) aufgenommen wird, wobei aus Lageverschiebungen von Punkten (34) in dem Bild (35), das das virtuelle Bild (32) des Punktemusters abbildet, gegenüber Punkten in dem direkten Bild auf den Verlauf der Kontur der Oberfläche (2) gegenüber der Referenzkontur geschlossen wird.

8. Vorrichtung zum Erfassen einer Kontur einer spiegelnden Oberfläche (2),
- mit einer auf einen Objekthalter (4) für ein die spiegelnde Oberfläche (2) aufweisendes Objekt (3) gerichteten Kamera (7),
- mit einem Punktemuster (29), das so neben dem Objekthalter (4) angeordnet ist, dass das mit der ersten Kamera (7) aufgenommene Bild (35) ein virtuelles Bild (32) des sich in der spiegelnden Oberfläche (2) spiegelnden Punktemusters (29) abbildet,
- mit einer zweiten auf den Objekthalter (4) gerichteten Kamera (8), die ein zweites Bild (35) desselben oder eines zweiten Punktemusters (29) aufnimmt, wobei das mit der zweiten Kamera (8) aufgenommene Bild (35) ebenfalls ein virtuelles Bild (32) des sich in der spiegelnden Oberfläche (2) spiegelnden Punktemusters (29) abbildet, und
- mit einer Auswerteeinheit (36), in der ein erstes und ein zweites zu einer Referenzkontur zugehöriges Referenzbild gespeichert ist,
**dadurch gekennzeichnet, dass**
zur Auflösung der Zweideutigkeit, dass eine Änderung der Neigung der spiegelnden Oberfläche (2) denselben Effekt haben kann wie eine Änderung der Höhenlage der spiegelnden Oberfläche (2), die zweite Kamera (8) aus einer anderen Richtung als die erste Kamera (7) auf die spiegelnde Oberfläche (2) gerichtet ist, und dass
in der Auswerteeinheit (36) aus Lageverschiebungen von Punkten (34) in den Bildern (35) beider Kameras (7, 8) gegenüber dem jeweils entsprechenden zu der Referenzkontur zugehörigen Referenzbild auf den Verlauf der Kontur der spiegelnden Oberfläche (2) gegenüber der Referenzkontur geschlossen wird.

9. Vorrichtung nach Anspruch 8, **dadurch gekennzeichnet, dass** das Punktemuster (29) ein stochastisches Punktemuster (29) ist.

10. Vorrichtung nach Anspruch 8 oder 9, **dadurch gekennzeichnet, dass** das Punktemuster (29) gegenüber den Kameras (7, 8) und dem Objekthalter (4) fest ausgerichtet ist.

11. Vorrichtung nach einem der Ansprüche 8 bis 10, **dadurch gekennzeichnet, dass** der Objekthalter (4) das Objekt (3) so hält, dass Fixpunkte der Oberfläche (2) gegenüber dem Punktemuster (29) und den Kameras (7, 8) definiert ausgerichtet sind.

12. Vorrichtung nach einem der Ansprüche 8 bis 11, **dadurch gekennzeichnet, dass** eine das Punktemuster (29) beleuchtende Lichtquelle (6) vorgesehen ist.

13. Vorrichtung nach einem der Ansprüche 8 bis 12, **dadurch gekennzeichnet, dass** die beiden Kameras (7, 8) und die zugehörigen Punktemuster (29) so ausgerichtet sind, dass in den beiden zu der Referenzkontur zugehörigen Referenzbildern (32) auf denselben physikalischen Bereichen der Referenzkontur jeweils Punkte aus den gleichen Bereichen zweier übereinstimmender Punktemuster (29) abgebildet werden.

14. Vorrichtung nach einem der Ansprüche 8 bis 13, **dadurch gekennzeichnet, dass** eine weitere Kamera (37) direkt auf das Punktemuster (29) gerichtet ist und ein weiteres, direktes Bild desselben Punktemusters (29) aufnimmt, wobei die Auswerteeinheit (36) aus Lageverschiebungen von Punkten (34) in dem Bild (35), das das virtuelle Bild (32) des Punktemusters abbildet, gegenüber Punkten in dem direkten Bild auf den Verlauf der Kontur der Oberfläche (2) gegenüber der Referenzkontur schliesst.

## Claims

1. Method of determining a contour of a reflecting surface (2),
- wherein a two-dimensional image of a dot pattern (29) is recorded with a first camera (7) directed onto the reflecting surface,
- wherein the dot pattern (29) is arranged next to the reflecting surface (2) in such a way that the image (35) recorded with the first camera (7) represents a virtual image (32) of the dot pattern (29) reflected by the reflecting surface (2),
- wherein a second image (35) of the same or of a second dot pattern (29) is recorded with a second camera (8),
- wherein the second image (35) also represents a virtual image (32) of the dot pattern (29) reflected by the reflecting surface (2),
**characterized in that**,
for clarification of the ambiguity that a change in inclination of the reflecting surface (2) may have the same effect as a change in height of the reflecting surface (2), the second camera (8) is directed onto the reflecting surface (2) in another direction than the first camera (7), and that
the course of the contour of the reflecting surface (2) as compared to a reference contour is deducted from position displacements of dots (34) in the images (35) of both cameras (7, 8) with regard to two corresponding reference images belonging to the reference contour.

2. Method of claim 1, **characterized in that** the dot pattern (29) is a random dot pattern of randomly distributed single dots (30).

3. Method of claim 1 or 2, **characterized in that** the dot pattern (29) is aligned with regard to the cameras (7, 8) in a well-defined way.

4. The method of claim 3, **characterized in that** the surface (2) is aligned with regard to the dot pattern (29) and the cameras (7, 8) via fixed-points.

5. Method of any of the claims 1 to 4, **characterized in that** the reference image represents a virtual image (32) of the dot pattern (29) reflected by a real reference surface (2) having a defined contour.

6. Method of any of the claims 1 to 5, **characterized in that**, in the two reference images (32) belonging to the reference contour, dots out of the same areas of two identical dot patterns (29) are imaged onto the same physical areas of the reference contour.

7. Method of any of the claims 1 to 6, **characterized in that** a further direct image of the same dot pattern (29) is recorded with a further camera (37) directly directed onto the dot pattern (29), wherein the course of the contour of the surface (2) as compared to the reference contour is deducted from position displacements of dots (34) in the image (35) which represents the virtual image (32) of the dot pattern with regard to dots in the direct image.

8. Device for determining a contour of a reflecting surface (2),
- comprising a camera (7) directed onto an object carrier (4) for an object (3) comprising the reflecting surface (2),
- comprising a dot pattern (29) which is arranged next to the object carrier (4) in such a way that the image (35) recorded with the first camera (7) is representing a virtual image of the dot pattern (29) reflected by the reflecting surface (2)
- comprising a second camera (8) directed onto the object carrier, which records a second image of the same or of a second dot pattern, wherein the image (35) recorded with the second camera (8) also is a virtual image (32) of the dot pattern (29) reflected by the reflecting surface (2), and
- comprising a evaluation unit (36) in which a first and a second reference image belonging to a reference contour are stored,
**characterized in that**,
for clarification of ambiguities that a change in inclination of the reflecting surface (2) may have the same effect as a change in height of the reflecting surface (2), a second camera (8) is directed onto the reflecting surface (2) in another direction than the first camera (7) and that
in the evaluation unit (36) the course of the contour of the reflecting surface (2) as compared to the reference contour is deducted from position displacements of dots (34) in the images (35) of both cameras (7, 8) with regard to the respective corresponding reference image belonging to the reference contour.

9. Device of claim 8, **characterized in that** the dot pattern (29) is a random dot pattern (29)

10. Device of claim 8 or 9, **characterized in that** the dot pattern (29) is in a fixed alignment with regard to the cameras (7, 8) and the object carrier (4).

11. Device of any of the claims 8 to 10, **characterized in that** the object carrier (4) carries the object (3) in such a way that fixed-points of the surface (2) are aligned with regard to the dot pattern (29) and the cameras (7, 8) in a well-defined way.

12. Device of any of the claims 8 to 11, **characterized in that** a light source (6) illuminating the dot pattern (29) is provided.

13. Device of any of the claims 8 or 12, **characterized in that** the two cameras (7, 8) and the associated dot patterns (29) are aligned in such a way that, in the two reference images (32) belonging to the reference contour, dots out of the same areas of two identical dot patterns (29) are imaged onto the same physical areas of the reference contour.

14. Device of any of the claims 8 or 13, **characterized in that** a further camera (37) is directly directed onto the dot pattern (29) and records a further direct image of the same dot pattern (29), wherein the evaluation unit (36) deducts the course of the contour of the surface (2) as compared to the reference contour from position displacements of dots (34) in the image (35) which represents the virtual image (32) of the dot pattern with regard to dots in the direct image

## Revendications

1. Procédé de détection d'un contour d'une surface (2) réfléchissante,
- une image bidimensionnelle d'une mire à points (29) étant enregistrée par une caméra (7) dirigée sur la surface réfléchissante,
- ladite mire à points (29) étant disposée à côté de la surface (2) réfléchissante de telle sorte que l'image (35) enregistrée par la première caméra (7) reproduit une image virtuelle (32) de la mire à points (29) se reflétant dans la surface (2) réfléchissante,
- une deuxième image (35) de ladite mire à points ou d'une deuxième mire à points (29) étant enregistrée par une deuxième caméra (8),
- la deuxième image (35) reproduisant également une image virtuelle (32) de la mire à points (29) se reflétant dans la surface (2) réfléchissante,
**caractérisé en ce que**
pour la résolution de l'ambiguïté selon laquelle une variation de l'inclinaison de la surface (2) réfléchissante peut avoir le même effet qu'une variation de la position en hauteur de la surface (2) réfléchissante, la deuxième caméra (8) est dirigée sur la surface (2) réfléchissante à partir d'une direction différente de celle de la première caméra (7), et **en ce que**
le tracé du contour de la surface (2) réfléchissante par rapport au contour de référence est déduit à partir des déplacements de la position des points (34) sur les images (35) des deux caméras (7, 8), par rapport à deux images de référence correspondantes, associées à un contour de référence.

2. Procédé selon la revendication 1, **caractérisé en ce que** la mire à points (29) est une mire à points (29) stochastique formée par des points (30) individuels répartis de manière stochastique.

3. Procédé selon la revendication 1 ou 2, **caractérisé en ce que** la mire à points (29) est orientée de manière définie par rapport aux caméras (7, 8).

4. Procédé selon la revendication 3, **caractérisé en ce que** la surface (2) est orientée par l'intermédiaire de points fixes par rapport à la mire à points (29) et aux caméras (7, 8).

5. Procédé selon l'une quelconque des revendications 1 à 4, **caractérisé en ce que** l'image de référence reproduit une image virtuelle (32) de la mire à points (29) se reflétant dans une surface de référence (2) réelle avec un contour défini.

6. Procédé selon l'une quelconque des revendications 1 à 5, **caractérisé en ce que** dans les deux images de référence (32), associées au contour de référence, sont reproduits sur les mêmes zones physiques du contour de référence respectivement des points issus des mêmes zones de deux mires à points (29) coïncidentes.

7. Procédé selon l'une quelconque des revendications 1 à 6, **caractérisé en ce qu'**une autre image directe de la même mire à points (29) est enregistrée par une caméra (37) supplémentaire, qui est dirigée directement sur la mire à points (29), sachant que le tracé du contour de la surface (2) par rapport au contour de référence est déduit à partir des déplacements de la position des points (34) dans l'image (35), reproduisant l'image virtuelle (32) de la mire à points, par rapport à des points dans l'image directe.

8. Dispositif de détection d'un contour d'une surface (2) réfléchissante,
- comportant une caméra (7) dirigée sur un porte-objet (4) pour un objet (3) muni d'une surface (2) réfléchissante,
- comportant une mire à points (29) disposée à côté du porte-objet (4) de telle sorte que l'image (35) enregistrée par la première caméra (7) reproduit une image virtuelle (32) de la mire à points (29) se reflétant dans la surface (2) réfléchissante,
- comportant une deuxième caméra (8) dirigée sur le porte-objet (4) et enregistrant une deuxième image (35) de ladite mire à points ou d'une deuxième mire à points (29), ladite deuxième image (35), enregistrée par la deuxième caméra (8), reproduisant également une image virtuelle (32) de la mire à points (29) se reflétant dans la surface (2) réfléchissante, et
- comportant une unité d'analyse (36), dans la mémoire de laquelle sont stockées une première et une deuxième image de référence, associées à un contour de référence,
**caractérisé en ce que**
pour la résolution de l'ambiguïté selon laquelle une variation de l'inclinaison de la surface (2) réfléchissante peut avoir le même effet qu'une variation de la position en hauteur de la surface (2) réfléchissante, la deuxième caméra (8) est dirigée sur la surface (2) réfléchissante à partir d'une direction différente de celle de la première caméra (7), et **en ce que**
le tracé du contour de la surface (2) réfléchissante par rapport au contour de référence est déduit dans l'unité d'analyse (36) à partir des déplacements de la position des points (34) sur les images (35) des deux caméras (7, 8), par rapport à l'image de référence respectivement correspondante, associée à un contour de référence.

9. Dispositif selon la revendication 8, **caractérisé en ce que** la mire à points (29) est une mire à points (29) stochastique.

10. Dispositif selon la revendication 8 ou 9, **caractérisé en ce que** la mire à points (29) est orientée de manière fixe par rapport aux caméras (7, 8) et au porte-objet (4).

11. Dispositif selon l'une quelconque des revendications 8 à 10, **caractérisé en ce que** le porte-objet (4) supporte l'objet (3) de telle sorte que des points fixes de la surface (2) sont orientés de manière définie par rapport à la mire à points (29) et aux caméras (7, 8).

12. Dispositif selon l'une quelconque des revendications 8 à 11, **caractérisé en ce qu'**il est prévu une source lumineuse (6) éclairant la mire à points (29).

13. Dispositif selon l'une quelconque des revendications 8 à 12, **caractérisé en ce que** les deux caméras (7, 8) et les mires à points (29) associées sont orientées de telle sorte que dans les deux images de référence (32), associées au contour de référence, sont reproduits sur les mêmes zones physiques du contour de référence respectivement des points issus des mêmes zones de deux mires à points (29) coïncidentes.

14. Dispositif selon l'une quelconque des revendications 8 à 13, **caractérisé en ce qu'**une caméra (37) supplémentaire est dirigée directement sur la mire à points (29) et enregistre une autre image directe de la même mire à points (29), sachant que le tracé du contour de la surface (2) par rapport au contour de référence est déduit dans l'unité d'analyse (36) à partir des déplacements de la position des points (34) dans l'image (35), reproduisant l'image virtuelle (32) de la mire à points, par rapport à des points dans l'image directe.
